# EUROPEAN PATENT SPECIFICATION

(11) **EP 4 311 764 B1**
(45) Date of publication and mention of the grant of the patent: **06.05.2026**
(21) Application number: 22186769.0
(22) Date of filing: 25.07.2022
(51) Int. Cl.: B64C 3/20, B64C 3/28, B64C 9/22, B64C 5/02, B64D 33/02, B64D 15/12

(54) **AERODYNAMIC STRUCTURE AND AIRCRAFT**
AERODYNAMISCHE STRUKTUR UND FLUGZEUG
STRUCTURE AÉRODYNAMIQUE ET AÉRONEF

(43) Date of publication of application: 31.01.2024
(73) Proprietor: Airbus Operations GmbH, 21129 Hamburg (DE)
(72) Inventor: SEACK, Oliver, 21129 Hamburg (DE)
(74) Representative: Isarpatent

(56) References cited:
- GB-A- 833 675
- US-A- 4 895 491
- US-A1- 2005 281 987
- US-A1- 2009 101 759
- US-A1- 2020 055 591

## Description

The invention relates to an aerodynamic structure. The invention is furthermore concerned with an aircraft containing such an aerodynamic structure.

The leading edges of aerodynamic surfaces are exposed to a number of adverse effects like corrosion or erosion from dust, rain, snow and hail, impacts from birds, hail, ground vehicles and tool drops, lightning strikes and heat from ice-protection systems. Furthermore, the leading edges of aerodynamic surfaces have also to withstand high aerodynamic loads, as airflows around an aerodynamic surface develop high pressure peaks at their leading edges. All these effects result in a list of requirements, which demand partially contradicting technical solutions.

Some of the technical solutions contain the placement of temporary protection against erosion, but that represents significant costs for the user. Currently, most of the aerodynamic surfaces of leading edges of today's passenger aircrafts are made from monolithic metals. For example, wing leading edge devices used for slow flight during take-off and landing, so-called slats, are typically made from aluminum alloys. Inlets of engine nacelles are made from aluminum too, but also from steel. The currently used material types offer in general good properties with respect to either structural strength, or resistance against erosion protection, thermal conductivity for thermal ice protection systems, surface smoothness, long-term optical appearance or manufacturability.

Today, there is a need for a solution that reduces corrosion/erosion effects and that would also withstand high aerodynamic loads.

Document GB833675A discloses a de-icing or anti-icing apparatus for an insulating surface, e.g. an aircraft wing, which comprises a metallic resistance layer which is applied direct to the surface by hot metal spraying, an insulating layer of thermo-setting plastic material also applied by hot spraying, and an outer metallic layer consisting of an undercoating, e.g. of aluminium, copper, or a synthetic resin intermixed with conductive particles such as silver flakes, and an electro-deposited top layer of relatively hard metal, e.g. of nickel or stainless steel.

Aspects of the invention may provide solutions for reducing harmful effects on leading edges.

According to the invention, this problem is solved by the subject-matter of the independent claim 1.

According to a first aspect of the invention, an aerodynamic structure comprising a leading edge having an outer structure is provided. The outer structure comprises a first layer and a second layer geometrically corresponding to the first layer. Thereby the first layer is positioned on an outside of the outer structure, the outside being exposed to a flowing fluid, and the second layer is positioned on an inside of the outer structure. The second layer material comprises a material composition having an elongation at fracture in the range of 80 % to 200 %.

Furthermore, the second layer has a higher ductility than the first layer and a higher thermal and electrical conductivity than the first layer, and the first layer has a lower thickness than the second layer.

In particular, an aerodynamic structure for an aircraft is provided.

According to a second aspect of the invention, an aircraft comprising an aerodynamic structure according to the invention is provided.

A fundamental concept of the invention is to providing the multilayer outer structure combining at least two different materials, wherein the different materials are combined such that each layer and material, respectively, is composed to have advantageous specific properties with respect to structural strength, resistance against erosion, thermal conductivity, surface smoothness, long-term optical appearance and manufacturability. Thereby, the combination of the specific properties of each layer and material, respectively, when assembled as the multilayer outer structure has in total more advantages for the aerodynamic structure comprising a leading edge than using a monolithic metal for the leading edge. Moreover, the first layer and the second layer geometrically correspond to each other, that means the shape of the first layer is substantially the same as the shape of the second layer.

In addition, the first layer material may include, for example, a material composition having an elongation at fracture less than or equal to 50 %, in particular less than or equal to 35 % in a solid state. Alternatively or additionally, the second layer material may, for example, comprise a material composition having an elongation at fracture in the range of 120 % to 180 % in a solid state. A higher ductility in the sense of the present invention is present, for example, if the elongations at fracture of the materials to be compared, i.e. the first layer material compared to the second layer material, differ by at least 10 % points. Elongation at break is a characteristic value in materials science that indicates the permanent elongation of the tensile specimen after fracture, based on the initial gauge length. The elongation at fracture thus characterizes the deformation capacity or ductility of a material. A test method according to DIN EN ISO 527, for example, is suitable for this purpose.

A particular advantage in the solution according to an aspect of the invention is that the aerodynamic structure for an aircraft can be optimized with respect to weight, cost and durability, whilst still fulfilling the numerous, contradicting requirements of corrosion, erosion, bird and hail strike, impact damage, lightning protection, ice-protection, air loads, aerodynamic smoothness and optical appearance. Furthermore, it can be beneficial for the aerodynamic structure regardless of being ice-protected additionally or not. Further, the multilayer outer structure can be manufactured like a conventional, monolithic metal sheet by bending, pressing, roll forming, milling or the like. Also no additional fasteners are required to fix the first layer and the second layer to each other. Fasteners are always problematic with respect to the aerodynamic smoothness of the outside of the outer structure, as it requires high effort to get the fasteners heads really flush with the outside. Additionally, the harder first layer can maintain a smooth and polished condition of the outside of the outer structure under erosive conditions longer than an outer structure only made from a more ductile material. Therefore, the aerodynamic structure according to the invention makes it relatively simple to achieve a surface smooth enough also for natural laminar flow applications.

Advantageous embodiments and further developments emerge from the description with reference to the figures.

As a result of the second layer having a higher thermal and electrical conductivity than the first layer, the weight can be reduced in an indirect way since the power required by an ice-protection device for heating up the outside of the outer structure to a predetermined temperature for de- or anti-icing would be reduced too. Thus, heater mats, cables, generators, and/or power and control units can be configured smaller and lighter further reducing the weight and the package. Moreover, less fuel would be needed to generate the required electric power onboard the aircraft during flight, in particular when using the ice-protection device configured as an electro-thermal ice-protection device, for example.

A higher thermal and electrical conductivity in the sense of the present invention is present, for example, if the thermal conductivity of the materials to be compared differ by at least 100 W/mK and if the electrical conductivity of the materials to be compared differ by at least 15x10⁶ s³ A²/kg m³ (or siemens per metre [S/m]). Electrical conductivity is a measure of how well electrical current (charge in motion) can pass through a material under the influence of an applied voltage/electric field. Thermal conductivity measures how well heat (thermal energy in motion) can pass through a material under a temperature differential. The thermal conductivity of metals is, like electrical conductivity, determined largely by the free electrons. The thermal conductivity is inversely proportional to the electrical conductivity in metals.

The first layer could be configured as a coating on the second layer, thereby keeping the weight of the aerodynamic structure to a minimum.

According to some further aspects of the aerodynamic structure according to the invention, the first layer has a thickness lower than 0.5 mm. In particular, the thickness of the first layer is in the range of about 0.2 to about 0.4 mm. Thereby, the adverse effects of the first layer can be reduced, while the intended effects of the first layer can be maintained at a predetermined sufficient level. The predetermined sufficient level could take into account polishing processes during life cycle or a minimum of thermal and electrical conductivity of the first layer, for instance.

According to some further aspects of the aerodynamic structure according to the invention, the material of the first layer consists of stainless steel. In particular, the material of the first layer is selected from the group of carbon, nitrogen, aluminum, silicon, sulfur, titanium, nickel, copper, selenium, niobium and molybdenum.

Stainless steel has a resistance to corrosion and luster. As a result, stainless steel or other corrosion resistant alloys can reduce corrosion and/or erosion of the outer structure of the leading edge.

According to some further aspects of the aerodynamic structure according to the invention, the material of the second layer comprises aluminum, aluminum alloy or the like light metals. Due to its lower density and better specific strength compared to other common metals, aluminum is often used where the mass of a means of transport has to be moved and contributes to fuel consumption, in particular in the aircraft and aerospace industry. Therefore, aluminum and duralumin are widely used and well approved in aircraft construction technology. In alloys with magnesium, silicon and other metals, strengths can be achieved that are only slightly inferior to those of mild or low strength steel.

According to some further aspects of the aerodynamic structure according to the invention, the material of the first layer has a higher melting temperature than the material of the second layer. In particular, the melting temperature of the material of the first layer is at least 300 °C higher, preferably at least 500 °C higher than the melting temperature of the material of the second layer. Thus, the outer structure can improve the recyclability of the aerodynamic structure since the melting temperatures of the first layer and the second layer differ from one another such that the materials can be separated by a controlled melting process. For example, aluminum, which could be used in the second layer, has a melting temperature of around 700 °C, while stainless steel, which could be used in the first layer, has a melting temperature of around 1500 °C.

According to some further aspects of the aerodynamic structure according to the invention, the outer structure further comprises an ice-protection device, which is integrated into and/or attached to the second layer. Thereby, the ice-protection device can be configured as an electro-thermal ice-protection device, a bleed-air ice protection device or an electro-mechanical ice-protection device like an electro-expulsive or an electro-impulsive ice-protection device. Further, the ice-protection device can comprise electrical heating elements and/or thermal insulation layers, which each can be attached to the inside of the outer structure and/or the second layer. Alternatively or additionally the electrical heating elements and/or thermal insulation layers can be integrated into the outer structure, in particular into the second layer.

According to some further aspects of the aerodynamic structure according to the invention, the outer structure further comprises a third layer geometrically corresponding to the second layer and positioned on an inner side of the second layer such that the outer structure is configured as a sandwich structure in the order first layer, second layer, third layer from the outside to the inside. As a result, further material properties can be combined in the outer structure. Optionally, the sandwich structure can be used to build a honeycomb sandwich structure or the like.

According to some embodiments of the aerodynamic structure according to the invention, the third layer is made of a material, which has a similar or identical thermal expansion coefficient as the material of the first layer. A similar thermal expansion coefficient differs from a compared thermal expansion coefficient at a maximum of 10 %, preferably at a maximum of 5 %. As a result, thermal distortion of the outer structure and the leading edge, respectively, can be reduced. During flight or by operating a thermal ice-protection device the outer structure of the leading edge can be affected to temperature changes which might cause thermal distortion, if the thermal distortion cannot be limited sufficiently by the stiffness of the whole structural assembly.

According to some further embodiments of the aerodynamic structure according to the invention, the third layer is made of the same material as the first layer. Thus, the elongation due to thermal changes of the outer structure is the same on the inside and on the outside of the outer structure. Preferably, the third layer has the same thickness as the first layer.

According to some further aspects of the aerodynamic structure according to the invention, the outer structure is manufactured by a metal coating process. In particular, the outer structure is manufactured by cold or hot rolling (cladding), by flame spraying, by sputtering or by physical vapor deposition (PVD). Cladding, for example, is an economic, effective and well established way to join great amounts to different metal sheets together to create a semi-finished product. Cladding is a process of coating sheet metal material by pressing two different metal sheets together with high pressure. Additionally, after one of the above mentioned coating processes the structure can be produced by a stretch forming process or a similar process. The metal coating process can establish a reliable, structural bonding/joint/connections by atomic diffusion between the two different metals, which do not degrade under mechanical loading or elevated temperatures.

According to some further aspects of the aerodynamic structure according to the invention, the first layer is sectional in contact with the second layer, in particular is completely in contact with the second layer. Thus, the stiffness of the outer structure can be improved.

According to some further aspects of the aerodynamic structure according to the invention, the outer structure consists of the first layer and the second layer.

The above embodiments and further developments can be combined with one another arbitrarily, as far as they fall within the scope defined by the appended claims. Further possible configurations, developments and implementations of the invention are also combinations of features of the invention described above or below for the exemplary embodiments that are not explicitly cited. In particular, a person skilled in the art will also add individual aspects as improvements or additions to the respective basic form of the present invention.

The present invention is explained more specifically below on the basis of the exemplary embodiments indicated in the schematic figures, in which:
- Fig. 1: shows a schematic illustration of a leading edge of an aerodynamic structure according to an embodiment of the invention;
- Fig. 2: shows a schematic illustration of an aircraft with an aerodynamic structure according to a further embodiment of the invention.

The accompanying figures are intended to convey a further understanding of the embodiments of the invention. They illustrate embodiments and are used in conjunction with the description to explain principles and concepts of the invention. Other embodiments and many of the cited advantages emerge in light of the drawings. The elements of the drawings are not necessarily shown to scale in relation to one another. Direction-indicating terminology such as for example "at the top", "at the bottom", "on the left", "on the right", "above", "below", "horizontally", "vertically", "at the front", "at the rear" and similar statements are merely used for explanatory purposes and do not serve to restrict the generality to specific configurations as shown in the figures.

In the figures of the drawing, elements, features and components that are the same, have the same function and have the same effect are each provided with the same reference signs - unless explained otherwise.

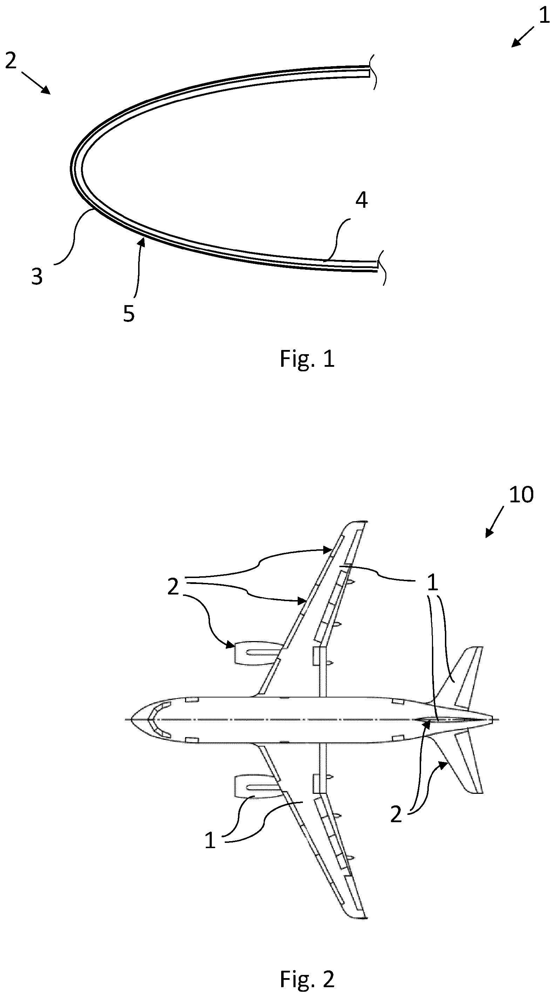

Fig. 1 shows a schematic illustration of a leading edge 2 of an aerodynamic structure 1. The leading edge 2 comprises an outer structure with a first layer 3 and a second layer 4.

The leading edge 2 is configured as a front part of the aerodynamic structure 1. A flowing fluid flowing in relation to the aerodynamic structure 1 first impacts at the leading edge 2 and then becomes guided by the shape of the outer structure building a laminar and/or turbulent flow around the aerodynamic structure 1.

The first layer 3 builds an outside 5 of the outer structure. Thereby, the outside 5 is exposed to the flowing fluid. In particular, the first layer 3 may comprise a metal, metal alloy or similar material. Preferably, the first layer 3 is made from stainless steel, for example. Stainless steel has a melting temperature of about 1500 °C and an elongation at fracture of about 35 %. Other materials are possible if the other material has the properties to serve as a protection layer.

The second layer 4 is positioned on the inside of the outer structure, that means on the opposite side of the outside 5. Thereby, the inside is not exposed to the flowing fluid. For example, the first layer may comprise a material, which has a higher melting temperature than the material of the second layer 4. In the exemplary embodiment according to Fig. 1 the material of the second layer 4 is an aluminum alloy but the invention is not limited to aluminum. The exemplary aluminum alloy has a melting temperature of about 700 °C and an elongation at fracture of about 130 %. Therefore, the melting temperature of the material of the first layer 3 is about 800 °C higher than the melting temperature of the material of the second layer 4, for example.

The first layer 3 has a lower thickness than the second layer 4. For example, the first layer 3 has a thickness of around 0.25 mm. Optionally, the thickness of the first layer 3 and/or the second layer 4 may vary in an area of the outer structure. Thus, for example the first layer 3 is thicker in an area where more erosion or more corrosion is present. The second layer 4 might be thicker in an area where a higher load on the outer structure is present, for example.

In this embodiment, the outer structure is manufactured by a metal coating process, in particular by a cladding process. That means the first layer 3 and the second layer 4 are pressed together. After the cladding process a semi-finished product is obtained, which can be produced further to create a double curved shape of the leading edge 2 by a stretch forming process. Thereby, the first layer 3 is in physical contact with the second layer 4. In particular, both layers are in contact with each other sectional or completely. However, other metal coating processes like flame spraying, sputtering, physical vapor deposition (PVD) or similar processes, can be used to attach the first layer 3 to the second layer 4. In particular for a shape of the leading edge 2, which cannot be manufactured by the stretch forming process from a sheet metal.

Fig. 2 shows a schematic illustration of an aircraft 10 with an aerodynamic structure 1. The aerodynamic structure 1 of the aircraft 1 can be configured as an engine nacelle air inlet, a wing slat, a droop nose or an empennage, for example. The aerodynamic structure 1 substantially corresponds to the aerodynamic structure according to the embodiment of Fig. 1, wherein the material composition and/or layer thickness of the first layer 3 and/or the second layer 4 can be adapted to improve the specific conditions for the leading edge 2 of the aerodynamic structure 1 for the aircraft 10.

The aerodynamic structure 1 and the outer structure of the leading edge 2, respectively, optionally comprises a third layer, wherein the third layer geometrically corresponds to the second layer 4. In particular, the third layer is positioned on an inner side of the second layer 4 such that the outer structure is configured as a sandwich structure. The sandwich structure can have the order first layer 3, second layer 4 and third layer from the outside 5 to the inside of the outer structure. Thereby, the third layer can be made of the same material as the first layer 3, which material is stainless steel for example.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments, insofar as these alternatives, modifications and equivalents fall within the scope defined by the appended claims. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present invention(s) is disclosed herein, it should be understood that modifications, substitutions and alternatives may be apparent to one of ordinary skill in the art and can be made without departing from the scope of this disclosure, insofar as these modifications, substitutions and alternatives fall within the scope defined by the appended claims.

This disclosure is intended to cover any adaptations or variations of the exemplary embodiment(s) which fall within the scope defined by the appended claims. In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

### Reference list

- 1: aerodynamic structure
- 2: leading edge
- 3: first layer
- 4: second layer
- 5: outside
- 10: aircraft

## Claims

1. Aerodynamic structure (1), in particular for an aircraft (10), comprising a leading edge (2) having an outer structure, wherein the outer structure comprises:
a first layer (3); and
a second layer (4) geometrically corresponding to the first layer (3);
wherein the first layer (3) is positioned on an outside (5) of the outer structure, the outside (5) being exposed to a flowing fluid, and the second layer (4) is positioned on an inside of the outer structure, wherein the second layer (4) comprises a material composition having an elongation at fracture in the range of 80 % to 200 %;
wherein the second layer (4) has a higher ductility than the first layer (3) and a higher thermal and electrical conductivity than the first layer (3); and
wherein the first layer (3) has a lower thickness than the second layer (4).

2. Aerodynamic structure (1) according to claim 1, wherein the first layer (3) has a lower thickness than 0.5 mm, in particular the thickness of the first layer is in the range of about 0.2 to about 0.4 mm.

3. Aerodynamic structure (1) according to one of the preceding claims, wherein the material of the first layer (3) consists of stainless steel, in particular the material of the first layer is selected from the group of carbon, nitrogen, aluminum, silicon, sulfur, titanium, nickel, copper, selenium, niobium and molybdenum.

4. Aerodynamic structure (1) according to one of the preceding claims, wherein the material of the second layer (4) comprises aluminum or aluminum alloy.

5. Aerodynamic structure (1) according to one of the preceding claims, wherein the material of the first layer (3) has a higher melting temperature than the material of the second layer (4), in particular the melting temperature of the material of the first layer is at least 300 °C higher than the melting temperature of the material of the second layer.

6. Aerodynamic structure (1) according to one of the preceding claims, wherein the outer structure further comprises an ice-protection device, which is integrated into and/or attached to the second layer (4).

7. Aerodynamic structure (1) according to one of the preceding claims, wherein the outer structure further comprises a third layer geometrically corresponding to the second layer (4) and positioned on an inner side of the second layer such that the outer structure is configured as a sandwich structure in the order first layer (3), second layer (4), third layer from the outside (5) to the inside.

8. Aerodynamic structure (1) according to claim 7, wherein the third layer is made of a material, which has a similar or identical thermal expansion coefficient as the material of the first layer.

9. Aerodynamic structure (1) according to claim 7 or 8, wherein the third layer is made of the same material as the first layer.

10. Aerodynamic structure (1) according to one of the preceding claims, wherein the outer structure is manufactured by a metal coating process, in particular by cold or hot rolling, by flame spraying, by sputtering or by physical vapor deposition.

11. Aerodynamic structure (1) according to one of the preceding claims, wherein the first layer (3) is sectional in contact with the second layer (4), in particular is completely in contact with the second layer.

12. Aircraft (10) comprising an aerodynamic structure (1) according to one of the preceding claims.

## Patentansprüche

1. Aerodynamische Struktur (1), insbesondere für ein Flugzeug (10), umfassend eine Vorderkante (2) mit einer Außenstruktur, wobei die Außenstruktur Folgendes umfasst:
eine erste Schicht (3) und
eine zweite Schicht (4), die der ersten Schicht (3) geometrisch entspricht;
wobei die erste Schicht (3) auf einer Außenseite (5) der Außenstruktur positioniert ist, die Außenseite (5) einem strömenden Fluid ausgesetzt ist und die zweite Schicht (4) auf einer Innenseite der Außenstruktur positioniert ist, wobei die zweite Schicht (4) eine Materialzusammensetzung mit einer Bruchdehnung im Bereich von 80 % bis 200 % umfasst;
wobei die zweite Schicht (4) eine höhere Duktilität als die erste Schicht (3) und eine höhere thermische und elektrische Leitfähigkeit als die erste Schicht (3) aufweist; und
wobei die erste Schicht (3) eine geringere Dicke als die zweite Schicht (4) aufweist.

2. Aerodynamische Struktur (1) nach Anspruch 1, wobei die erste Schicht (3) eine geringere Dicke als 0,5 mm aufweist, insbesondere die Dicke der ersten Schicht im Bereich von etwa 0,2 bis etwa 0,4 mm liegt.

3. Aerodynamische Struktur (1) nach einem der vorhergehenden Ansprüche, wobei das Material der ersten Schicht (3) aus rostfreiem Stahl besteht, insbesondere das Material der ersten Schicht ausgewählt ist aus der Gruppe von Kohlenstoff, Stickstoff, Aluminium, Silicium, Schwefel, Titan, Nickel, Kupfer, Selen, Niob und Molybdän.

4. Aerodynamische Struktur (1) nach einem der vorhergehenden Ansprüche, wobei das Material der zweiten Schicht (4) Aluminium oder Aluminiumlegierung umfasst.

5. Aerodynamische Struktur (1) nach einem der vorhergehenden Ansprüche, wobei das Material der ersten Schicht (3) eine höhere Schmelztemperatur als das Material der zweiten Schicht (4) aufweist, insbesondere die Schmelztemperatur des Materials der ersten Schicht mindestens 300 °C höher als die Schmelztemperatur des Materials der zweiten Schicht ist.

6. Aerodynamische Struktur (1) nach einem der vorhergehenden Ansprüche, wobei die äußere Struktur ferner eine Eisschutzvorrichtung umfasst, die in die zweite Schicht (4) integriert und/oder an dieser angebracht ist.

7. Aerodynamische Struktur (1) nach einem der vorhergehenden Ansprüche, wobei die äußere Struktur ferner eine dritte Schicht umfasst, die geometrisch der zweiten Schicht (4) entspricht und auf einer Innenseite der zweiten Schicht so positioniert ist, dass die äußere Struktur als Sandwichstruktur in der Reihenfolge erste Schicht (3), zweite Schicht (4), dritte Schicht von außen (5) nach innen ausgelegt ist.

8. Aerodynamische Struktur (1) nach Anspruch 7, wobei die dritte Schicht aus einem Material hergestellt ist, das einen ähnlichen oder identischen thermischen Ausdehnungskoeffizienten wie das Material der ersten Schicht aufweist.

9. Aerodynamische Struktur (1) nach Anspruch 7 oder 8, wobei die dritte Schicht aus dem gleichen Material wie die erste Schicht hergestellt ist.

10. Aerodynamische Struktur (1) nach einem der vorhergehenden Ansprüche, wobei die äußere Struktur durch ein Metallbeschichtungsverfahren, insbesondere durch Kalt- oder Warmwalzen, durch Flammspritzen, durch Sputtern oder durch physikalische Gasphasenabscheidung hergestellt ist.

11. Aerodynamische Struktur (1) nach einem der vorhergehenden Ansprüche, wobei die erste Schicht (3) abschnittsweise in Kontakt mit der zweiten Schicht (4) ist, insbesondere vollständig in Kontakt mit der zweiten Schicht ist.

12. Flugzeug (10), umfassend eine aerodynamische Struktur (1) nach einem der vorhergehenden Ansprüche.

## Revendications

1. Structure aérodynamique (1), en particulier pour un aéronef (10), comprenant un bord d'attaque (2) présentant une structure extérieure, la structure extérieure comprenant :
une première couche (3) ; et
une deuxième couche (4) correspondant géométriquement à la première couche (3) ;
dans laquelle la première couche (3) est positionnée sur l'extérieur (5) de la structure extérieure, l'extérieur (5) étant exposé à un écoulement de fluide, et la deuxième couche (4) est positionnée sur l'intérieur de la structure extérieure, la deuxième couche (4) comprenant une composition de matériau présentant un allongement à la rupture compris entre 80 % et 200 % ;
dans laquelle la deuxième couche (4) présente une ductilité supérieure à celle de la première couche (3) et une conductivité thermique et électrique supérieure à celle de la première couche (3) ; et
dans laquelle la première couche (3) a une épaisseur inférieure à celle de la deuxième couche (4).

2. Structure aérodynamique (1) selon la revendication 1, dans laquelle la première couche (3) a une épaisseur inférieure à 0,5 mm, en particulier l'épaisseur de la première couche est comprise entre environ 0,2 et environ 0,4 mm.

3. Structure aérodynamique (1) selon l'une des revendications précédentes, dans laquelle le matériau de la première couche (3) est constitué d'acier inoxydable, en particulier le matériau de la première couche est choisi dans le groupe du carbone, de l'azote, de l'aluminium, du silicium, du soufre, du titane, du nickel, du cuivre, du sélénium, du niobium et du molybdène.

4. Structure aérodynamique (1) selon l'une des revendications précédentes, dans laquelle le matériau de la deuxième couche (4) comprend de l'aluminium ou un alliage d'aluminium.

5. Structure aérodynamique (1) selon l'une des revendications précédentes, dans laquelle le matériau de la première couche (3) présente une température de fusion supérieure à celle du matériau de la deuxième couche (4), en particulier la température de fusion du matériau de la première couche est supérieure d'au moins 300 °C à la température de fusion du matériau de la deuxième couche.

6. Structure aérodynamique (1) selon l'une des revendications précédentes, dans laquelle la structure extérieure comporte en outre un dispositif de protection contre le givre qui est intégré et/ou fixé à la deuxième couche (4).

7. Structure aérodynamique (1) selon l'une des revendications précédentes, dans laquelle la structure extérieure comporte en outre une troisième couche correspondant géométriquement à la deuxième couche (4) et positionnée sur un côté intérieur de la deuxième couche de sorte que la structure extérieure est conçue comme une structure en sandwich avec, dans l'ordre, la première couche (3), la deuxième couche (4) et la troisième couche de l'extérieur (5) vers l'intérieur.

8. Structure aérodynamique (1) selon la revendication 7, dans laquelle la troisième couche est faite d'un matériau qui a un coefficient de dilatation thermique similaire ou identique à celui du matériau de la première couche.

9. Structure aérodynamique (1) selon la revendication 7 ou 8, dans laquelle la troisième couche est faite du même matériau que la première couche.

10. Structure aérodynamique (1) selon l'une des revendications précédentes, dans laquelle la structure extérieure est fabriquée par un procédé de métallisation, en particulier par laminage à froid ou à chaud, par projection à la flamme, par pulvérisation cathodique ou par dépôt physique en phase vapeur.

11. Structure aérodynamique (1) selon l'une des revendications précédentes, dans laquelle la première couche (3) présente une section en contact avec la deuxième couche (4), notamment est entièrement en contact avec la deuxième couche.

12. Aéronef (10) comprenant une structure aérodynamique (1) selon l'une des revendications précédentes.
